# EUROPEAN PATENT APPLICATION

(11) **EP 4 815 468 A1**
(43) Date of publication of application: **30.09.2026**
(21) Application number: 23962366.3
(22) Date of filing: 22.12.2023
(51) Int. Cl.: H04N 21/438, H04N 21/422

(54) **IMAGE DISPLAY DEVICE AND CHANNEL SWITCHING METHOD THEREFOR**

(71) Applicant: LG Electronics Inc., Yeongdeungpo-gu Seoul 07336 (KR)
(72) Inventor: YOO, Yongsu, Seoul 06772 (KR); LEE, Inchul, Seoul 06772 (KR)
(74) Representative: Schott, Jakob Valentin
(86) International application number: PCT/KR2023/021463
(87) International publication number: WO 2025/135260

(57) **Abstract**

An image display device and a channel switching method therefor are disclosed. The channel switching method for the image display device may comprise the steps of: decoding the frames constituting received content of the current channel; and storing only some frames of received content of the previous channel or content of the next channel, and then performing decoding from some stored frames when switching channels, thereby enabling channel switching speed to be reduced.

## Description

### TECHNICAL FIELD

The present disclosure relates to an image display device capable of switching channels and a channel switching method for the same, and particularly relates to an image display device capable of reducing a channel switching time and a channel switching method for the same.

### BACKGROUND ART

An image display device, for example, a television (referred to hereinafter as a TV), may decode received broadcast content and display the decoded broadcast content through a display unit.

Such broadcast content includes a plurality of image frames in the case of video. At a transmitting side, the plurality of image frames is compressed on a GOP (Group Of Pictures) basis into the forms of an I (Intra)-frame, a P (Predicted)-frame, and a B (Bidirectional or Bidirectionally Predicted)-frame, and then transmitted to the image display device. Here, the I-frame, P-frame, and B-frame may also be referred to as an I-picture, a P-picture, and a B-picture, respectively, and the GOP may also be referred to as a GOF (Group Of Frames). In the present disclosure, the terms frame and picture are used interchangeably and have the same meaning.

Here, the I-frame may also be referred to as a key frame. The I-frame is a frame that may be independently decoded without referencing other frames. Such an I-frame may be designated for every k-th frame among a plurality of image frames, or may be designated as a frame having a high score when scoring correlations among frames. That is, the I-frame is used at the beginning of broadcast content, upon scene change, etc.

The P-frame may also be referred to as a forward predictive frame. The P-frame is a frame that stores a difference between a current frame and an immediately previous I-frame or P-frame by comparing the two frames. Accordingly, in the image display device, the P-frame is decoded when reference to the I-frame or the previous P-frame is available.

The B-frame is a frame that stores a difference between a current frame and a previous and/or next I-frame or P-frame by comparing the two frames. Accordingly, in the image display device, the B-frame is decoded when references to both a previous or next I-frame and/or P-frame are available.

Further, the GOP refers to an encoding unit in which at least one I-frame, one or more P-frames, and one or more B-frames are grouped together, and one or more P-frames and one or more B-frames are included between I-frames according to a predetermined pattern.

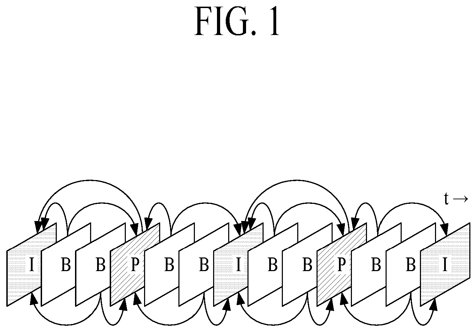

FIG. 1 is a diagram illustrating an example of a GOP structure. In FIG. 1, the GOP structure is IBBPBBIBBPBBI.

In this case, the number of frames included in the GOP, an arrangement pattern of frames, etc. may vary, and a compression ratio and a transmission rate may vary according to the number of frames included in the GOP structure and the arrangement pattern thereof.

In general, since one I-frame is included in one GOP, FIG. 1 may be regarded as an example of two GOP structures.

In such a GOP structure, the I-frame does not depend on any other frame, and thus may be independently decoded. In contrast, the P-frame and the B-frame depend on previous and/or next frame, and therefore the corresponding previous and/or next frame needs to be first received and decoded. In other words, the B-frame depends on the I-frame and the P-frame, and the P-frame depends on the I-frame.

Accordingly, when a user requests channel switching to another channel while viewing broadcast content of a specific channel on the image display device, if the channel switch occurs between an I-frame and another I-frame on the switched channel, a video decompression operation (that is, decoding) may start only after the next I-frame is received. For example, when the channel switch is performed in the middle of the GOP, a video of the switched channel is not displayed until an I-frame of a next GOP is received and decoded.

That is, a time interval between an I-frame and another I-frame included in broadcast content affects a channel switching time, and a waiting time for receiving the I-frame (that is, a key video frame) generally has a significant impact, accounting for 90 percent or more of the overall channel switching time. In other words, depending on the number of frames included in the GOP and a time point at which the channel switch request is performed in the GOP (that is, a channel switch start position), the waiting time until the video of the switched channel is displayed may become longer.

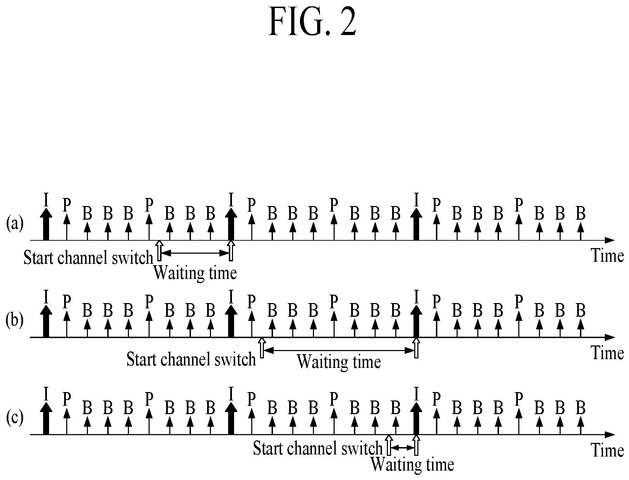

FIGs. 2(a) to 2(c) are diagrams illustrating examples of waiting times that vary according to a point in time at which a channel switch is initiated when the GOP structure is IPBBBPBBB.

FIG. 2(a) illustrates a case in which a channel switch request (or initiation) occurs between a second P-frame and a following B-frame within the GOP. In this case, a video is displayed after a waiting period corresponding to approximately three frame intervals until the next I-frame is received.

FIG. 2(b) illustrates a case in which a channel switch request (or initiation) occurs between a first P-frame and a following B-frame within the GOP. In this case, a video is displayed after a waiting period corresponding to approximately seven frame intervals until the next I-frame is received.

FIG. 2(c) illustrates a case in which a channel switch request (or initiation) occurs before a last B-frame within the GOP. In this case, a video is displayed after a waiting period corresponding to approximately one frame interval until the next I-frame is received.

As described above, when channel switch is performed in an image display device (for example, a TV), a time during which the TV waits for the next I-frame of a compressed video of a newly switched channel may be significantly long or very short. That is, the channel switching time is greatly affected by the time during which the TV waits for reception of the I-frame, and therefore there is a disadvantage that the waiting time during channel switching may become long.

### DISCLOSURE

### TECHNICAL ASPECT

The present disclosure has been proposed to solve the above-described problems and various related problems, and an aspect of the present disclosure is to provide an image display device and a channel switching method for the same for improving a channel switching speed.

However, the present disclosure is not limited to the above-described objects, and other objects that may be derived by a person skilled in the art from the overall content of the present document also fall within the scope of the present disclosure.

### TECHNICAL SOLUTIONS

To achieve the above-described aspects and other advantages, a channel switching method in an image display device includes receiving content of a current channel, receiving content of a previous channel relative to the current channel, receiving content of a next channel relative to the current channel, decoding frames included in the received content of the current channel, displaying, on a screen, the content of the current channel including the decoded frames, decoding frames included in the received content of the previous channel or storing some of the frames included in the received content of the previous channel, and then starting decoding from the stored some frames in response to selection of channel-down from a remote controller, displaying, on the screen, content of the previous channel including the frames, which are decoded in the decoding frames included in the received content of the previous channel, at a time point when channel-down is selected from the remote controller, decoding frames included in the received content of the next channel or storing some of the frames included in the received content of the next channel, and then starting decoding from the stored some frames in response to selection of channel-up from the remote controller, and displaying, on the screen, content of the next channel including the frames, which are decoded in the decoding frames included in the received content of the next channel, at a time point when channel-up is selected from the remote controller.

According to embodiments, the frames included in the received content may be grouped on a GOP (Group Of Pictures) basis, and each GOP may include at least one I-frame, one or more P-frames, and one or more B-frames.

According to embodiments, some of the frames of the content of the previous channel stored in the decoding frames included in the received content of the previous channel may be frames in a most recently received GOP.

According to embodiments, when decoding the frames included in the received content of the previous channel in the decoding frames included in the received content of the previous channel, decoding of a B-frame may be omitted, and decoding of the B-frame may be performed from a time point when channel-down is selected from the remote controller.

According to embodiments, some of the frames of the content of the next channel stored in the decoding frames included in the received content of the next channel may be frames in a most recently received GOP.

According to embodiments, when decoding the frames included in the received content of the next channel in the decoding frames included in the received content of the next channel, decoding of a B-frame may be omitted, and decoding of the B-frame may be performed from a time point when channel-up is selected from the remote controller.

According to embodiments, the channel switching method may further include transmitting, to a server, in advance before channel switching by the remote controller, at least one of a channel changing request to the previous channel or a channel changing request to the next channel when the content of the current channel is received from the server through a network.

According to embodiments, an image display device includes a remote controller capable of selecting channel-down to a previous channel and channel-up to a next channel relative to a current channel for channel switching, a first channel processor configured to receive content of the previous channel and store some of frames included in the received content of the previous channel, a second channel processor configured to receive content of the current channel, a third channel processor configured to receive content of the next channel and store some of frames included in the received content of the next channel, a selector configured to select and output frames of content of one of the first channel processor to the third channel processor, a decoding unit configured to decode the frames of the content output from the selector, a display processor configured to display, on a screen, content including the frames decoded by the decoding unit, and a controller configured to control the selector and the decoding unit so that decoding starts from some frames stored in the first channel processor or from some frames stored in the third channel processor according to selection of channel-down or channel-up by the remote controller.

According to embodiments, the frames included in the received content may be grouped on a GOP basis, and each GOP may include at least one I-frame, one or more P-frames, and one or more B-frames.

According to embodiments, some of the frames of the content of the previous channel stored in the first channel processor may be frames in a most recently received GOP.

According to embodiments, some frames of the content of the next channel stored in the third channel processor may be frames in a most recently received GOP.

According to embodiments, when the content of the current channel is received from a server through a network, the controller may transmit, to the server, in advance before channel switching by the remote controller, at least one of a channel changing request to the previous channel or a channel changing request to the next channel.

According to embodiments, an image display device includes a remote controller capable of selecting channel-down to a previous channel and channel-up to a next channel relative to a current channel for channel switching, a first channel processor configured to receive content of the previous channel and decode frames included in the received content of the previous channel, a second channel processor configured to receive content of the current channel and decode frames included in the received content of the current channel, a third channel processor configured to receive content of the next channel and decode frames included in the received content of the next channel, a selector configured to select and output decoded frames from one of the first channel processor to third channel processor, a display processor configured to display, on a screen, content including the frames selected by the selector, and a controller configured to control the selector to select the decoded frames from one of the first channel processor to third channel processor according to selection of channel-down or channel-up by the remote controller.

According to embodiments, the frames included in the received content may be grouped on a GOP basis, and each GOP may include at least one I-frame, one or more P-frames, and one or more B-frames.

According to embodiments, the first channel processor may omit decoding of the B-frame when decoding the frames included in the received content of the previous channel, and may perform decoding of the B-frame from a time point when channel-down is selected from the remote controller.

According to embodiments, the third channel processor may omit decoding of the B-frame when decoding the frames included in the received content of the next channel, and may perform decoding of the B-frame from a time point when channel-up is selected from the remote controller.

According to embodiments, when the content of the current channel is received from a server through a network, the controller may transmit, to the server, in advance before channel switching, at least one of a channel changing request to the previous channel or a channel changing request to the next channel.

### ADVANTAGEOUS EFFECTS

According to the device and method of the present disclosure, a plurality of reception units and a plurality of decoding units are provided, and while content of a current channel is displayed on a screen, content of a previous channel and/or content of the next channel are simultaneously received and decoded using the remaining reception units and decoding units. Accordingly, there is an effect in that, when a user changes channels using a channel up/down button of a remote controller, the channel is switched to content of a new channel without a waiting time, thereby reducing the channel switching time.

According to the device and method of the present disclosure, a plurality of reception units and a plurality of storage units are provided, and while content of a current channel is displayed on a screen, some frames including the most recent I-frame of content of a previous channel and/or some frames including the most recent I-frame of content of the next channel are simultaneously received and stored using the remaining reception units and storage units. Accordingly, there is an effect in that, when a user changes channels using a channel up/down button of a remote controller, the channel is switched to content of a new channel without a waiting time, thereby reducing a channel switching time.

According to the device and method of the present disclosure, in an Internet-based image display device, while content of a current channel is received through a network and displayed on a screen, a server is requested in advance to change a channel to a previous channel and/or to the next channel. Accordingly, there is an effect in that a waiting time associated with a request and response over the network for a new channel to be switched to is eliminated, thereby reducing a channel switching time.

In addition to the effects explicitly described above, a person skilled in the art may also derive other effects from the entire disclosure.

### DESCRIPTION OF DRAWINGS

The drawings are included to facilitate a further understanding of the embodiments, and illustrate the embodiments together with the description related thereto.
FIG. 1 is a diagram illustrating an example of compressed frames included in general content;
FIGs. 2(a) to 2(c) are diagrams illustrating examples of waiting times that vary depending on a time point when channel switching starts when a GOP structure is IPBBBPBBB;
FIG. 3 is a diagram illustrating examples of channel-up/down buttons in a remote controller;
FIG. 4 is a block diagram illustrating an example of an image display device according to a first embodiment of the present disclosure;
FIG. 5(a) is a diagram illustrating an example of a waiting time during channel switching according to a conventional method, and FIG. 5(b) is a diagram illustrating an example of a waiting time during channel switching according to a method according to the first embodiment;
FIG. 6 is a diagram illustrating examples of compressed frames included in content when a codec is an HEVC scheme according to embodiments;
FIG. 7 is a block diagram illustrating an example of an image display device according to a second embodiment of the present disclosure; and
FIG. 8(a) is a diagram illustrating an example of a waiting time during channel switching according to a conventional method, and FIG. 8(b) is a diagram illustrating an example of a waiting time during channel switching according to a method according to the second embodiment.

### BEST MODE FOR DISCLOSURE

Hereinafter, embodiments disclosed herein will be described in detail with reference to the accompanying drawings. The same or similar components may be assigned the same reference numerals regardless of the reference numerals, and repeated descriptions thereof will be omitted. The following embodiments are merely provided to illustrate the present disclosure, and are not intended to limit or restrict the scope of the present disclosure. Matters readily inferable by a person skilled in the art from the detailed description and the embodiments of the present disclosure should be construed as falling within the scope of the present document.

The detailed description of the present document should not be construed as restrictive in any respect, and should be regarded as illustrative. The scope of the present document should be determined by a reasonable interpretation of the appended claims, and all modifications falling within the equivalent scope of the present document should be construed as falling within the scope of the present document.

The blocks of the accompanying block diagrams or the steps of the flowcharts may be directly implemented in hardware, may be implemented as software modules executed by hardware, or may be implemented through a combination thereof. In addition, the blocks of the accompanying block diagrams or the steps of the flowcharts may be construed as computer program instructions loaded into a processor or a memory of data processing equipment, such as a general-purpose computer, a specialpurpose computer, a portable notebook computer, or a network computer, to perform designated functions. Since these computer program instructions may be stored in a memory included in a computer device or in a computer-readable memory, the functions described in the blocks of the block diagrams or the steps of the flowcharts may also be embodied in an article of manufacture including instruction means for performing the functions. Each block or step may represent a module, a segment, or a portion of code including one or more executable instructions for performing specified logical function(s). In some alternative embodiments, the functions described in the blocks or steps may be performed in an order different from a predetermined order. For example, two blocks or steps illustrated in succession may be performed substantially simultaneously, may be performed in reverse order, or, in some cases, may be performed with one or more blocks or steps omitted.

In the present disclosure, the factor having the greatest influence on channel switching time in an image display device, for example, a TV, is the characteristic of a TV signal. The TV receives content in a compressed form, and such content includes a plurality of GOPs. Each GOP includes an I-frame (that is, a key frame), one or more P-frames, and one or more B-frames. In the present disclosure, the term "content" may be interchangeably used with "broadcast content".

According to embodiments, on a transmission side, video frames included in content may be compressed into I-frames, P-frames, and B-frames on a GOP basis using various codecs and then transmitted to the image display device.

For example, codecs such as MPEG-4 AVC (Moving Picture Experts Group-4 Advanced Video Coding) (also referred to as H.264), HEVC (High Efficiency Video Coding) (also referred to as H.265), MPEG-2, VP9, and AV1 may be used to compress video frames included in content.

The present disclosure is intended to provide a method and a device for improving a channel switching speed in an image display device that receives and reproduces content having such characteristics (or broadcast content).

In the present disclosure, the image display device may be implemented as various types of devices capable of receiving digital broadcast signals, including a TV, a monitor, a smartphone, a portable terminal, a mobile terminal, a Personal Digital Assistant (PDA), a computer, a laptop computer, a notepad, a tablet, a smart TV, and an IPTV (Internet Protocol TV). However, it will be apparent to those skilled in the art that the image display device of the present disclosure is not limited to the above-described devices.

In the present disclosure, the content may be a program of a specific channel, or may be an advertisement inserted at the beginning or end of a program or between programs.

In general, channel switching in the image display device is performed using a remote controller (or referred to as a remote control).

In the present disclosure, any remote controller having channel-up and channel-down functions may be used. According to embodiments, the channel-up and channel-down functions of the remote controller may be implemented in the form of buttons and/or in the form of a wheel mouse (also referred to as a mouse wheel).

For example, when the user presses a channel-up button on the remote controller, a current channel is switched to the next channel. As another example, the user may increase or decrease the channel by scrolling a wheel mouse mounted on the remote controller upward or downward. In general, an operation of scrolling the wheel mouse upward or downward proceeds more quickly than an operation of pressing the up/down button of the remote controller. Therefore, the user may feel greater inconvenience due to the channel switch delay caused by a waiting time for an I-frame. That is, in the wheel-mouse method, a channel switch waiting time perceived by the user during channel switching may feel longer than a channel switch waiting time in the button-based method.

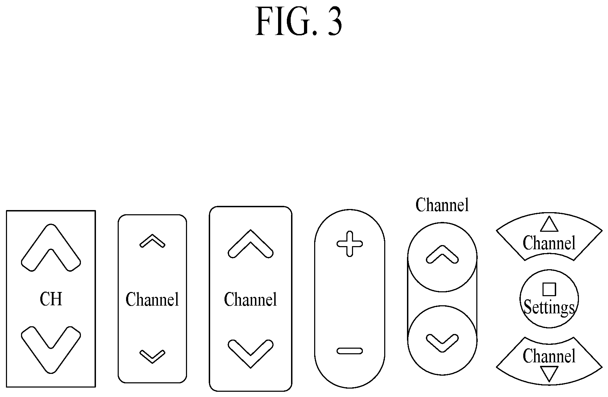

FIG. 3 is a diagram illustrating examples of channel-up/down buttons of the remote controller. In the present disclosure, the channel-up/down button of the remote controller may have one of the forms illustrated in FIG. 3 or may have another form.

For example, assuming that a channel number of a currently viewed channel is 11-1, a channel number of a previous channel is 10-1, and a channel number of the next channel is 12-1, when the user presses the channel-up button of the remote controller, the channel is changed to 10-1, and when the user presses the channel-down button, the channel is changed to 12-1.

For convenience of description, in the present disclosure, a channel number currently being viewed by the user is referred to as the current channel, a channel number which is a lower number (that is, a number in the decreasing direction) relative to the current channel is referred to as a previous channel (or a down channel), and a channel number which is a higher number (that is, a number in the increasing direction) relative to the current channel is referred to as the next channel (or an up channel).

In this case, the previous channel may be the channel having the immediately preceding channel number relative to the current channel number, but may not necessarily be the immediately preceding channel number depending on the settings. For example, when favorite channels have been set or only certain channels are available for viewing, the previous channel number may or may not be the immediately preceding channel number relative to the current channel number. This is similarly applied to the next channel.

Further, according to a channel-up or channel-down signal transmitted from the remote controller, a broadcast signal (or broadcast content) selected by the image display device may include not only terrestrial, cable, and satellite signals, but also services provided by mapping content provided by content providers to channels.

When the image display device is the TV, considering the fact that, according to the social perception of the TV device, the user scenario that users most generally expect from a TV and actually occur most frequently is "channel up/down", the present disclosure proposes a method to improve channel switching speed by pre-switching the next and previous channels in the background while the current channel is being watched.

That is, in this case, a plurality of reception units (for example, two reception units) operating in the background of the TV are already receiving the I-frames (that is, key video frames) of the corresponding channels. Therefore, when switching to one of those channels using the channel-up/down button of the remote controller, the waiting time required to receive an I-frame may be eliminated, thereby reducing the channel switching time.

In the present disclosure, channel switching may be performed according to the following two embodiments depending on whether decoding is performed in advance on the frames that have been received in advance.

As a first embodiment, the present disclosure provides a plurality of reception units and a plurality of decoding units. While the user is viewing the current channel, at least broadcast content of the previous channel and/or broadcast content of the next channel is simultaneously received and decoded using the remaining reception units and decoding units. Accordingly, when the user performs channel switching using the channel-up/down button of the remote controller, broadcast content of the new channel may be displayed immediately without a waiting time. That is, in the first embodiment, decoding is performed in advance on data received in advance. The first embodiment has an advantage that control method is simple and easy. The first embodiment may be applied to an HDMI (High-Definition Multimedia Interface)-to-RF (Radio Frequency) digital TV switching scenario, and in this case, the channel switching time may be reduced to 20% of that of a conventional method.

As a second embodiment, the present disclosure provides a plurality of reception units and a plurality of storage units. While the user is viewing the current channel, at least the most recent I-frame of the broadcast content of the previous channel and/or the most recent I-frame of the broadcast content of the next channel is simultaneously received and stored using the remaining reception units and storage units. Accordingly, when the user performs channel switching using the channel-up/down button of the remote controller, since the next I-frame is already stored in the storage unit corresponding to the new channel, the user does not need to wait for the next I-frame and may immediately display the broadcast content of the new channel without a waiting time. In this case, each storage unit may store only the next I-frame of the corresponding channel or may store an entire GOP including the next I-frame.

When channel switching is performed according to the first embodiment or the second embodiment proposed in the present disclosure, not only in a button-based switching method but also in rapid and repetitive channel switching situations using the wheel mouse, a video from a new channel may be presented to the user immediately with little waiting time caused by the I-frame.

Since the present disclosure relates to video in broadcast content, a description of audio will be omitted.

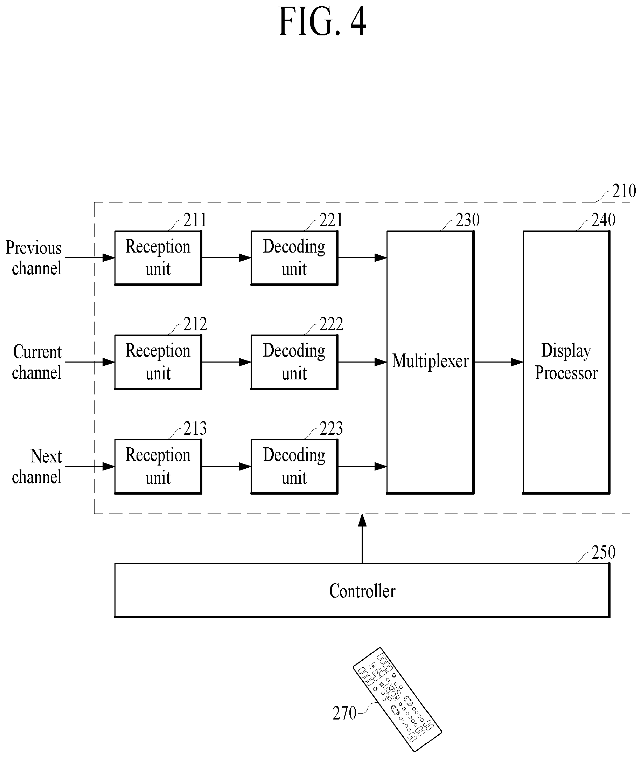

FIG. 4 is a configuration block diagram illustrating an example of an image display device according to the first embodiment of the present disclosure.

Each component of the image display device of FIG. 4 corresponds to hardware, software, a processor, and/or a combination thereof. In FIG. 4, an execution order of the respective blocks may be changed, some blocks may be omitted, and some blocks may be newly added.

The image display device according to the first embodiment may include a video processor 210 for receiving, decoding, and displaying broadcast content, a controller 250 for controlling operations of the respective blocks within the video processor 210, and a remote controller 270.

The video processor 210 may include first to third reception units 211 to 213, first to third decoding units 221 to 223, a multiplexer 230, and a display processor 240. When the video processor 210 includes two reception units and two decoding units, one thereof may be used for the current channel and the other may be used for the next channel. As another example, one may be used for the current channel and the other may be used for the previous channel.

When the image display device of FIG. 4 is an RF-based TV, each of the first to third reception units 211 to 213 may include at least a tuner, a demodulator, and a parser. Here, the tuner receives broadcast content of a specific channel under the control of the controller 250, the demodulator demodulates the received broadcast content, and the parser parses (or extracts) I-frames, P-frames, and B-frames from the demodulated broadcast content on a GOP basis.

According to embodiments, the parser may perform processes such as packet analysis and audio/video separation to parse I-frames, P-frames, and B-frames from the demodulated broadcast content.

According to embodiments, the parser may not be included in the reception unit and may be implemented as a separate device or component. Alternatively, some functions of the parser may be included in the decoding unit.

According to embodiments, each of the first to third decoding units 221 to 223 may decode and reconstruct compressed frames (for example, I-frames, P-frames, and B-frames) included in the corresponding broadcast content by applying a codec algorithm. For example, an I-frame is decoded, a current P-frame is decoded using a previous I-frame or P-frame as a reference frame, and a current B-frame is decoded using a previous I-frame or P-frame and a next I-frame or P-frame.

According to embodiments, the multiplexer 230 selects one of outputs of the first to third decoding units 221 to 223 under the control of the controller 250 and outputs the selected output to the display processor 240.

According to embodiments, the display processor 240 performs processing required to display the decoded broadcast content on a screen (also referred to as a display). That is, the display processor 240 performs operations such as format conversion, resolution conversion, frame-rate conversion, frame adjustment through scaling or cropping, aspect-ratio conversion, and color-space conversion of the decoded broadcast content of the current channel to fit the screen, and then displays the processed content. This is merely one example, and various additional functions and optimizations may be performed by the display processor 240 depending on the specific implementation and requirements of the device and software.

According to embodiments, the remote controller 270 may communicate with the controller 250 through a short-range communication network including infrared communication or Bluetooth. Further, the remote controller 270 includes a power on/off button for turning the image display device on or off.

In the first embodiment, the first to third reception units 211 to 213, the first to third decoding units 221 to 223, the multiplexer 230, and the display processor 240 remain active (or on) whenever power is supplied to the image display device.

In this instance, frame buffers (not illustrated) are required for the first to third decoding units 221 to 223 to decode broadcast content of the previous channel, broadcast content of the current channel, and broadcast content of the next channel. The frame buffers may use allocated portions of a memory. That is, the frame buffers are used to store reference frames (for example, I-frames, P-frames, and B-frames) required to decode compressed frames (for example, P-frames and B-frames) in the first to third decoding units 221 to 223. Here, a size of a frame buffer may vary depending on the size of the GOP, that is, the number of P-frames and B-frames included between an I-frame and the next I-frame.

For convenience of description, the present disclosure assumes that the first reception unit 211 receives broadcast content of the previous channel, the second reception unit 212 receives broadcast content of the current channel, and the third reception unit 213 receives broadcast content of the next channel. This is merely an example provided for ease of understanding. Alternatively, the first reception unit 211 may receive broadcast content of the current channel, one of the second reception unit 212 and the third reception unit 213 may receive broadcast content of the previous channel, and the other receives broadcast content of the next channel.

Since the present disclosure assumes that the second reception unit 212 receives broadcast content of the current channel, the I-frames, P-frames, and B-frames of the broadcast content received and parsed by the second reception unit 212 are decoded by the second decoding unit 222 and then displayed on the screen (or the display) of the image display device through the multiplexer 230 and the display processor 240 under the control of the controller 250.

At the same time, the first reception unit 211 receives broadcast content of the previous channel and parses I-frames, P-frames, and B-frames, and the first decoding unit 221 decodes the parsed I-frames, P-frames, and B-frames. Further, the third reception unit 213 receives broadcast content of the next channel and parses I-frames, P-frames, and B-frames, and the third decoding unit 223 decodes the parsed I-frames, P-frames, and B-frames. That is, while the broadcast content of the current channel is decoded and displayed, the broadcast content of the previous channel and the broadcast content of the next channel are processed only up to decoding.

In this instance, when the user presses one of the channel-up/down buttons of the remote controller 270 or scrolls the wheel mouse button upward or downward, the broadcast content of the previous channel being decoded by the first decoding unit 221 is displayed on the screen through the multiplexer 230 and the display processor 240 under the control of the controller 250, or the broadcast content of the next channel being decoded by the third decoding unit 223 is displayed on the screen through the multiplexer 230 and the display processor 240 under the control of the controller 250.

For example, when the user presses the channel-down button of the remote controller 270 or scrolls the wheel mouse button downward, that is, when the user selects a channel switch to the previous channel, the broadcast content of the previous channel being decoded by the first decoding unit 221 is displayed on the screen through the multiplexer 230 and the display processor 240 under the control of the controller 250.

That is, while the broadcast content of the current channel is being displayed on the screen, the first reception unit 211 and the first decoding unit 221 have already been receiving and decoding the broadcast content of the previous channel in the background. Accordingly, when a channel switch to the previous channel is initiated, there is no need to wait for the next I-frame on the newly switched channel. Therefore, the channel switching speed to the previous channel increases.

In this case, since the first reception unit 211 and the first decoding unit 221 receive and decode the broadcast content of the current channel as a result of the channel switch, the second reception unit 212 and the second decoding unit 222 receive and decode the broadcast content of the previous channel in the background under the control of the controller 250. For example, when the current channel is 11-1 and the broadcast content of channel 11-1 is being received and decoded through the second reception unit 212 and the second decoding unit 222 and displayed on the screen through the multiplexer 230 and the display processor 240, if the user selects a channel-down operation using the remote controller 270, the broadcast content of channel 10-1, which has been received and decoded by the first reception unit 211 and the first decoding unit 221, is displayed on the screen through the multiplexer 230 and the display processor 240. In this case, under the control of the controller 250, the second reception unit 212 and the second decoding unit 222 receive and decode the broadcast content of the previous channel (for example, channel 9-1) in the background.

As another example, when the user presses the channel-up button of the remote controller 270 or scrolls the wheel mouse button upward, that is, when the user selects a channel switch to the next channel, the broadcast content of the next channel being decoded by the third decoding unit 223 is displayed on the screen through the multiplexer 230 and the display processor 240 under the control of the controller 250.

That is, while the broadcast content of the current channel is being displayed on the screen, the third reception unit 213 and the third decoding unit 223 have already received and decoded the broadcast content of the next channel in the background. Therefore, when the channel switch to the next channel starts, it is unnecessary to wait for the next I-frame on the newly switched channel. Accordingly, the channel switching speed to the next channel is increased.

In this case, since the third reception unit 213 and the third decoding unit 223 receive and decode the broadcast content of the current channel due to the channel switch, the second reception unit 212 and the second decoding unit 222 receive and decode the broadcast content of the next channel in the background under the control of the controller 250. For example, when the current channel is 11-1 and the broadcast content of channel 11-1 is being received and decoded through the second reception unit 212 and the second decoding unit 222 and then displayed on the screen through the multiplexer 230 and the display processor 240, if the user selects channel-up using the remote controller 270, broadcast content of channel 12-1, which has been received and decoded by the third reception unit 213 and the third decoding unit 223, is displayed on the screen through the multiplexer 230 and the display processor 240. In this case, under the control of the controller 250, the second reception unit 212 and the second decoding unit 222 receive and decode broadcast content of the next channel (for example, 13-1) in the background.

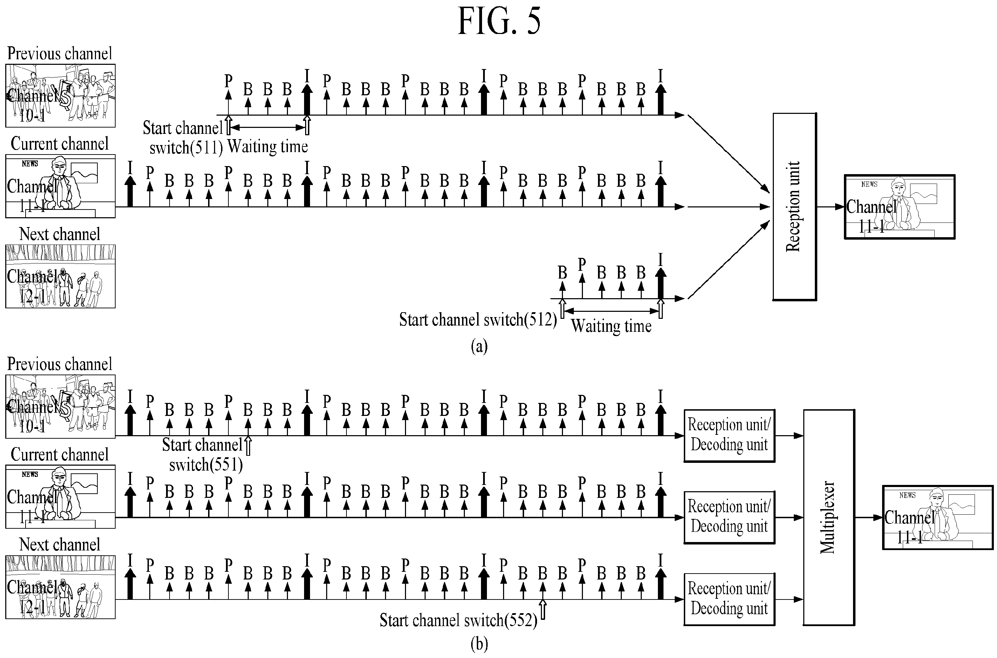

FIG. 5(a) and FIG. 5(b) are diagrams illustrating an example of comparing the waiting time during a channel switch according to the method of the first embodiment with a waiting time during a channel switch according to a conventional method.

That is, FIG. 5(a) is a diagram illustrating an example of the waiting time during the channel switch according to the conventional method, and FIG. 5(b) is a diagram illustrating an example of the waiting time during the channel switch according to the method of the first embodiment.

FIG. 5(a) illustrates an example in which the image display device is provided with only one reception unit.

For example, when the user selects channel-down using the remote controller 270 while the image display device is displaying current channel 11-1, the reception unit tunes to the previous channel 10-1 and starts receiving broadcast content of the previous channel 10-1. When the user selects the channel switch at position 511 of the previous channel 10-1, even though the channel switch starts at position 511, actual decoding starts after waiting until the next I-frame arrives, and the decoded frames are displayed. That is, after waiting for approximately a time interval of four frames until the next I-frame arrives, a video of the previous channel 10-1 is displayed on the screen.

As another example, when the user selects channel-up using the remote controller 270 while the image display device is displaying the current channel 11-1, the reception unit tunes to the next channel 12-1 and starts receiving broadcast content of the next channel 12-1. When the user selects the channel switch at position 512 of the next channel 12-1, even though the channel switch starts at position 512, actual decoding starts after waiting until the next I-frame arrives, and the decoded frames are displayed. That is, after waiting for approximately a time interval of five frames until the next I-frame arrives, video of the next channel 12-1 is displayed on the screen.

FIG. 5(b) illustrates an example in which the image display device is provided with at least three reception units and at least three decoding units, all of which remain in an active state. For example, the three reception units/decoding units of FIG. 5(b) may correspond to the first to third reception units 211-213 and the first to third decoding units 221 to 223 of FIG. 4. That is, each of the three reception units/decoding units receives and decodes broadcast content of a corresponding channel. For convenience of description, illustration and description of the display processor are omitted in FIG. 5(b).

For example, when the user selects channel-down using the remote controller 270 while the broadcast content of the current channel 11-1, which is received and decoded by the second reception unit/decoding unit, is being displayed on the screen through the multiplexer, the multiplexer selects the broadcast content of the previous channel 10-1, which is being received and decoded by the first reception unit/decoding unit, and the selected broadcast content of the previous channel 10-1 is displayed on the screen. Assuming that the user selects the channel switch at position 521 of the previous channel 10-1, since reception and decoding of the broadcast content of the previous channel 10-1 have already been performed, the first reception unit/decoding unit does not need to wait for the next I-frame, and the broadcast content of the previous channel 10-1 is displayed immediately with almost no waiting time at a time point when the channel switch starts. That is, even though the video of the previous channel 10-1 is displayed on the screen after waiting for approximately a time interval of four frames after the start of the channel switch in FIG. 5(a), the video of the immediately previous channel 10-1 is displayed on the screen with almost no waiting time after the start of the channel switch in FIG. 5(b).

As another example, when the user selects channel-up using the remote controller 270 while the broadcast content of the current channel 11-1, which is received and decoded by the second reception unit/decoding unit, is being displayed on the screen through the multiplexer, the multiplexer selects the broadcast content of the next channel 12-1, which is being received and decoded by the third reception unit/decoding unit, and the selected broadcast content of the next channel 12-1 is displayed on the screen. Assuming that the user selects the channel switch at position 522 of the next channel 12-1, since reception and decoding of the broadcast content of the next channel 12-1 have already been performed, the third reception unit/decoding unit does not need to wait for the next I-frame, and the broadcast content of the next channel 12-1 is displayed immediately with almost no waiting time at time point when the channel switch starts. That is, even though the video of the next channel 12-1 is displayed on the screen after waiting for approximately a time interval of five frames after the start of the channel switch in FIG. 5(a), the video of the next channel 12-1 is displayed on the screen with almost no waiting time after the start of the channel switch in FIG. 5(b).

Meanwhile, among compressed frames (or compressed video frames), there may be frames satisfying the following conditions depending on the codec and encoding method.

An example is a case in which there is no frame(s) referenced by itself and an operation of decoding the frame(s) referenced by itself occurs before a decoding operation of itself.

When the codec is MPEG-2, a frame satisfying such conditions may be a B-frame as illustrated in FIG. 1. That is, an I-frame is referenced by a P-frame or a B-frame, and a P-frame is referenced by another P-frame or a B-frame. However, a B-frame may or may not be referenced by another B-frame. In FIG. 1, the B-frame is not referenced by any other frame.

When the codec is HEVC H.265 and this HEVC H.265 codec has temporal scalability, a frame included in the highest temporal layer may be a frame satisfying the above conditions.

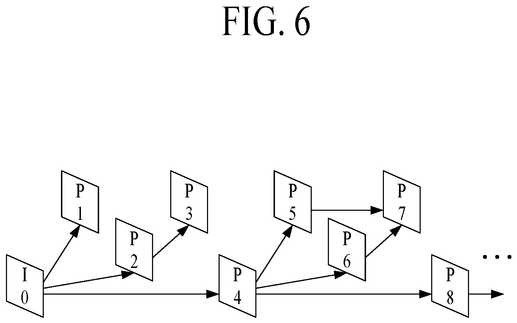

FIG. 6 is a diagram illustrating an example of a temporal scalability structure when the codec according to embodiments is HEVC.

In FIG. 6, frames corresponding to P1, P3, P5, and P7 may be frames satisfying the above conditions.

In the present disclosure, for frame(s) satisfying the above conditions, the decoding unit decoding the broadcast content of the previous channel and/or the decoding unit decoding the broadcast content of the next channel may refrain from decoding until the moment when the current channel is switched to the previous channel or the next channel, and may then perform decoding. That is, while frame(s) satisfying the above conditions are in a background position, decoding is not performed. When the corresponding decoding unit is at a foreground position due to a channel switch, the corresponding decoding unit performs decoding. Even in this case, the corresponding decoding unit may still maintain the channel switching speed advantage without causing malfunction. For frame(s) for which channel switching speed does not decrease even when decoding is skipped, decoding is not performed while the corresponding decoding unit is located in the background, thereby reducing an increase in load on a central processor (CPU) and an increase in memory bandwidth caused by simultaneously operating multiple decoding units, multiplexers, etc.

Meanwhile, according to the second embodiment of the present disclosure, decoding is performed only for the broadcast content of the current channel, and frames of the previously received broadcast content of the previous channel and frames of the broadcast content of the next channel are not decoded. Taking the previous channel as an example, at least one most recent frame among the frames included in the broadcast content of the previous channel is stored without being decoded. The frame stored at this time may vary according to memory capacity, system performance, etc. For example, the stored at least one frame may be the most recent I-frame, frames within a GOP including the most recent I-frame, or frames during a specific period of time (for example, one second) based on the most recent time point. That is, since broadcast content (that is, a TV signal) is continuously received, when frames between new I-frames (that is, video data) are received, frames between previous I-frames (that is, video data) are discarded. Accordingly, the previous channel (or next channel) located in the background always stores only frames between the latest I-frames. Then, at the moment of a channel switch from the current channel to the next channel or the previous channel, previously stored frames between I-frames of the next channel or the previous channel are decoded and displayed on the screen. In this case, since the two reception units located in the background (the reception unit of the previous channel and the reception unit of the next channel with respect to the current channel) have already received not only I-frames (that is, key video frames) of the corresponding channels but also non-key video frames (for example, P-frames and B-frames), a waiting time for receiving an I-frame may be eliminated. As a result, a channel switching time may be reduced. In the case of audio data, compressed audio data also has key audio frames in a manner similar to compressed video data, and thus a method similar to that for video data may be applied thereto.

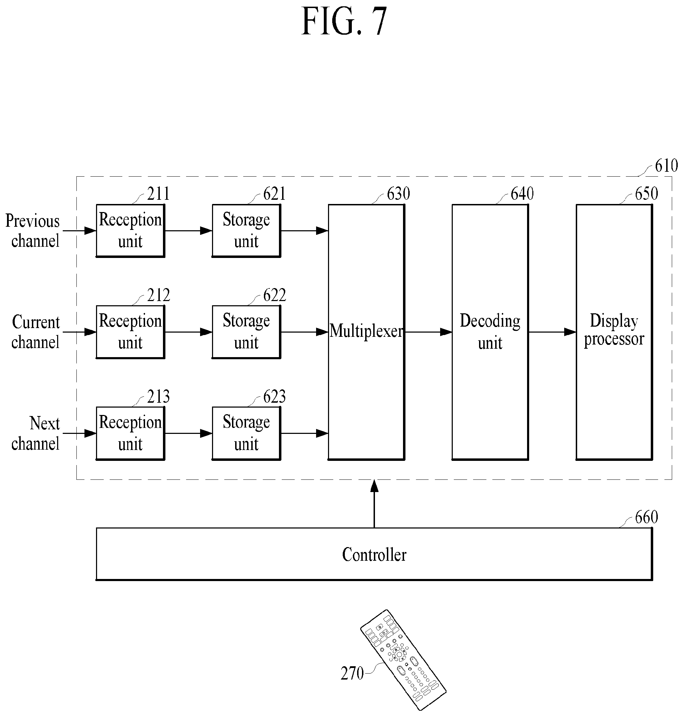

FIG. 7 is a configuration block diagram illustrating an example of an image display device according to the second embodiment of the present disclosure.

Each component of the image display device of FIG. 7 corresponds to hardware, software, a processor, and/or a combination thereof. In FIG. 7, an execution order of the respective blocks may be changed, some blocks may be omitted, and some blocks may be newly added.

The image display device according to the second embodiment may include a video processor 610 for receiving, decoding, and displaying broadcast content, a controller 660 for controlling an operation of each block in the video processor 610, and a remote controller 270.

The video processor 610 may include first to third reception units 211 to 213, first to third storage units 621 to 623, a multiplexer 630, a decoding unit 640, and a display processor 650. When the video processor 610 includes two reception units and storage units, one thereof may be used for the current channel and the other may be used for the next channel. As another example, one may be used for the current channel and the other may be used for the previous channel.

In FIG. 7, when the image display device is an RF (Radio Frequency)-based TV, each of the first to third reception units 211 to 213 may include at least a tuner, a demodulator, and a parser. Here, the tuner receives broadcast content of a specific channel under the control of the controller 660, the demodulator demodulates the received broadcast content, and the parser parses (or extracts) I-frames, P-frames, and B-frames from the demodulated broadcast content on a GOP basis.

According to embodiments, the parser may perform processes such as packet analysis and audio/video separation to parse I-frames, P-frames, and B-frames from the demodulated broadcast content.

According to embodiments, the parser may be implemented as a separate device or component without being included in the reception unit. Alternatively, some functions of the parser may be included in the decoding unit.

For convenience of description, the present disclosure assumes that the first reception unit 211 receives the broadcast content of the previous channel, the second reception unit 212 receives the broadcast content of the current channel, and the third reception unit 213 receives the broadcast content of the next channel. This is merely an example for facilitating understanding. The first reception unit 211 may receive the broadcast content of the current channel, one of the second reception unit 212 and the third reception unit 213 may receive the broadcast content of the previous channel, and the other receives the broadcast content of the next channel.

In this case, a first storage unit 621 and a third storage unit 623 store only the most recent partial frames of the corresponding broadcast content, and frames stored in the first storage unit 621 and the third storage unit 623 are not decoded. In contrast, a second storage unit 622 stores frames to be used as reference frames for decoding the broadcast content of the current channel, and the decoding unit 640 decodes a current frame by referring to the frames stored in the second storage unit 622 provided through the multiplexer 630. That is, the number and types of frames stored in the first storage unit 621 and the third storage unit 623 are different from the number and types of frames stored in the second storage unit 622. In other words, the frames stored in the first storage unit 621 and the third storage unit 623 are frames for decoding during a channel switch, and the frames stored in the second storage unit 622 are frames used as reference frames during decoding.

In the present disclosure, taking the previous channel as an example, the first storage unit 621 stores the most recent I-frame among the frames of the broadcast content of the previous channel output from the first reception unit 211 without exception. In addition, the first storage unit 621 may store all frames in the GOP including the most recent I-frame, or may store all frames between the most recent I-frame and the previous I-frame. As another example, the first storage unit 621 may store frames for the most recent predetermined period of time or may store frames included in the most recent GOP. For example, the predetermined period of time may be equal to or longer than a time required to receive one GOP. According to embodiments, the predetermined period of time or the number of stored frames may vary depending on the memory capacity, etc. Such a rule is equally applied to the third storage unit 623 that stores partial frame(s) of the broadcast content of the next channel. When the reception unit and storage unit receiving and storing the previous channel or next channel are changed, the above rule may be equally applied to the changed storage unit.

According to embodiments, the multiplexer 630 selects output of the storage unit storing frames of the broadcast content of the current channel under the control of the controller 660 and outputs the selected output to the decoding unit 640. For example, when the second storage unit 622 is the storage unit storing the frames of the broadcast content of the current channel, output of the second storage unit 622 is selected and output to the decoding unit 640.

According to embodiments, the decoding unit 640 decodes a current frame using the frames stored in the second storage unit 622 as reference frames. That is, the decoding unit 640 may restore compressed frames included in the broadcast content of the current channel (for example, I-frames, P-frames, and B-frames) by decoding the frames using a codec algorithm. For example, an I-frame is not decoded, a current P-frame is decoded using a previous I-frame or P-frame as a reference frame, and a current B-frame is decoded using a previous I-frame or P-frame and then a next I-frame or P-frame.

According to embodiments, the display processor 650 performs processing required to display the decoded broadcast content of the current channel on the screen (also referred to as the display). That is, the display processor 650 performs operations such as format conversion, resolution conversion, frame-rate conversion, frame adjustment through scaling or cropping, aspect-ratio conversion, and color-space conversion of the decoded broadcast content of the current channel to fit the screen, and then displays the content. This is merely one example, and various additional functions and optimizations may be performed by the display processor 650 depending on specific implementations and requirements of the device and software.

According to embodiments, the remote controller 270 may transmit and receive signals to and from the controller 660 through a short-range communication network including infrared communication or Bluetooth. In addition, the remote controller 270 includes a power on/off button for turning the image display device on or off.

In the first embodiment, the first to third reception units 211 to 213, the first to third storage units 621 to 623, the multiplexer 630, the decoding unit 640, and the display processor 650 always remain in an active (or on) state when power is supplied to the image display device. Since the present disclosure assumes that the second reception unit 212 receives the broadcast content of the current channel, the I-frames, P-frames, and B-frames of the broadcast content received and parsed by the second reception unit 212 are decoded by the decoding unit 640 under the control of the controller 660 and then displayed on the screen (or the display) of the image display device through the display processor 650.

At the same time, the first reception unit 211 receives the broadcast content of the previous channel and parses I-frames, P-frames, and B-frames, and the first storage unit 621 stores the most recent I-frame among the parsed I-frames, P-frames, and B-frames. In addition, the first storage unit 621 may further store some frames related to the most recent I-frame. For example, frames in the GOP including the most recent I-frame (for example, frames between the most recent I-frame and an I-frame) may be further stored. According to embodiments, when a new GOP including a new I-frame is received, the frames of the previously stored GOP are discarded and the new GOP is stored. In addition, the third reception unit 213 receives the broadcast content of the next channel and parses I-frames, P-frames, and B-frames, and the third storage unit 623 stores the most recent I-frame among the parsed I-frames, P-frames, and B-frames. In addition, the third storage unit 623 may further store some frames related to the most recent I-frame. For example, frames in the GOP including the most recent I-frame (for example, frames between the most recent I-frame and an I-frame) may be further stored. According to embodiments, when a new GOP including a new I-frame is received, the frames of the previously stored GOP are discarded and the new GOP is stored. That is, while the broadcast content of the current channel is decoded and displayed, some frames including the most recent I-frame of the broadcast content of the previous channel and the broadcast content of the next channel are merely stored and are not decoded.

In this instance, when the user presses one of the channel up/down buttons of the remote controller 270 or scrolls the wheel mouse button upward or downward, under the control of the controller 660, the frames stored in the first storage unit 621 are provided to the decoding unit 640 through the multiplexer 630, decoded, and then displayed on the screen through the display processor 650, or the frames stored in the third storage unit 623 are provided to the decoding unit 640 through the multiplexer 630, decoded, and then displayed on the screen through the display processor 650. When the frames stored in the first storage unit 621 or the third storage unit 623 are frames in the GOP including the most recent I-frame of the corresponding broadcast content, the image displayed on the screen may be ahead of a GOP at a channel switching time point by up to one GOP (that is, a time interval of an I-frame).

For example, when the user presses the channel-down button of the remote controller 270 or scrolls (or rotates) the wheel mouse button downward, that is, when the user selects a channel switch to the previous channel, the frames of the broadcast content of the previous channel stored in the first storage unit 621 are decoded by the decoding unit 640 and then displayed on the screen through the display processor 650.

That is, while the broadcast content of the current channel is being displayed on the screen, the first reception unit 211 and the first storage unit 621 have been receiving the broadcast content of the previous channel in the background and storing some frames including the most recent I-frame thereof. Therefore, when the channel switch to the previous channel starts, it is unnecessary to wait for the next I-frame on the newly switched channel. Accordingly, the channel switching speed to the previous channel is increased.

In this case, since the first reception unit 211 and the first storage unit 621 receive and store the broadcast content of the current channel due to the channel switch, the second reception unit 212 and the second storage unit 622 receive the broadcast content of the previous channel in the background under the control of the controller 660 and store some frames including the most recent I-frame thereof. For example, when the current channel is 11-1 and the user selects channel-down using the remote controller 270 while broadcast content of channel 11-1 is received and stored through the second reception unit 212 and the second storage unit 622 and then displayed on the screen through the multiplexer 630, the decoding unit 640, and the display processor 650, frames of broadcast content of channel 10-1, which have been received and stored by the first reception unit 211 and the first storage unit 621, are decoded and then displayed on the screen through the display processor 650. In this case, under the control of the controller 660, the second reception unit 212 and the second decoding unit 222 receive broadcast content of the previous channel (for example, 9-1) in the background and store some frames including the most recent I-frame thereof.

As another example, when the user presses the channel-up button of the remote controller 270 or scrolls (or rotates) the wheel mouse button upward, that is, when the user selects a channel switch to the next channel, the frames of the broadcast content of the next channel stored in the third storage unit 623 are decoded by the decoding unit 640 and then displayed on the screen through the display processor 650.

That is, while the broadcast content of the current channel is being displayed on the screen, the third reception unit 213 and the third storage unit 623 have been receiving the broadcast content of the next channel in the background and storing some frames including the most recent I-frame thereof. Therefore, when the channel switch to the next channel starts, it is unnecessary to wait for the next I-frame on the newly switched channel. Accordingly, the channel switching speed to the next channel is increased.

In this case, since the third reception unit 213 and the third storage unit 623 receive and store the broadcast content of the current channel due to the channel switch, the second reception unit 212 and the second storage unit 622 receive the broadcast content of the next channel in the background under the control of the controller 660 and store some frames including the most recent I-frame thereof. For example, when the current channel is 11-1 and the user selects channel-up using the remote controller 270 while the broadcast content of channel 11-1 is received and stored through the second reception unit 212 and the second storage unit 622 and then displayed on the screen through the multiplexer 630, the decoding unit 640, and the display processor 650, the frames of the broadcast content of channel 12-1, which have been received and stored by the third reception unit 213 and the third storage unit 623, are decoded and then displayed on the screen through the display processor 650. In this case, under the control of the controller 660, the second reception unit 212 and the second decoding unit 222 receive the broadcast content of the next channel (for example, 13-1) in the background and store some frames including the most recent I-frame thereof.

As described above, according to the second embodiment, for channels other than the current channel, for example, the broadcast content of the previous channel and the broadcast content of the next channel, only some frames including the most recent I-frame among continuously received frames (for example, the most recent GOP) are maintained in a stored state. Therefore, during a channel switch, decoding is immediately performed on the already stored frames, thereby having an effect of reducing the channel switching time (or accelerating channel switching). That is, since the image display device always stores video signals between the latest I-frame and an adjacent I-frame as signals of adjacent channels, a waiting time for receiving an I-frame may be eliminated during a channel switch, and thus a video of a newly switched channel may be immediately displayed on the screen (also the display).

In addition, in the case of the second embodiment, only a decoding unit for decoding the broadcast content of the current channel is required. That is, only one decoding unit is required. Therefore, the present disclosure may be applied even to a low-cost TV that supports only one VDEC (Video Decoder) and one ADEC (Audio Decoder), which are components of the image display device. In other words, according to the second embodiment, the two reception units and storage units responsible for receiving the broadcast content of the previous channel and the next channel located in the background merely receive and store signals, and no decoding by a decoding unit is required.

When the second embodiment is applied to the image display device configured as illustrated in FIG. 4, only the decoding unit that decodes the broadcast content of the current channel remains in an on (that is, active) state, and the decoding unit that decodes the broadcast content of the previous channel and the decoding unit that decodes the broadcast content of the next channel remain in an off (that is, inactive) state. Then, when a channel switch to the previous channel or the next channel occurs, only the decoding unit that decodes the broadcast content of the switched previous channel or next channel changes to the on (that is, active) state, and the remaining decoding units change to the off (that is, inactive) state. Even in this case, a method of storing some frames of the broadcast content of the previous channel and some frames of the broadcast content of the next channel in the background position is the same as that of the second embodiment.

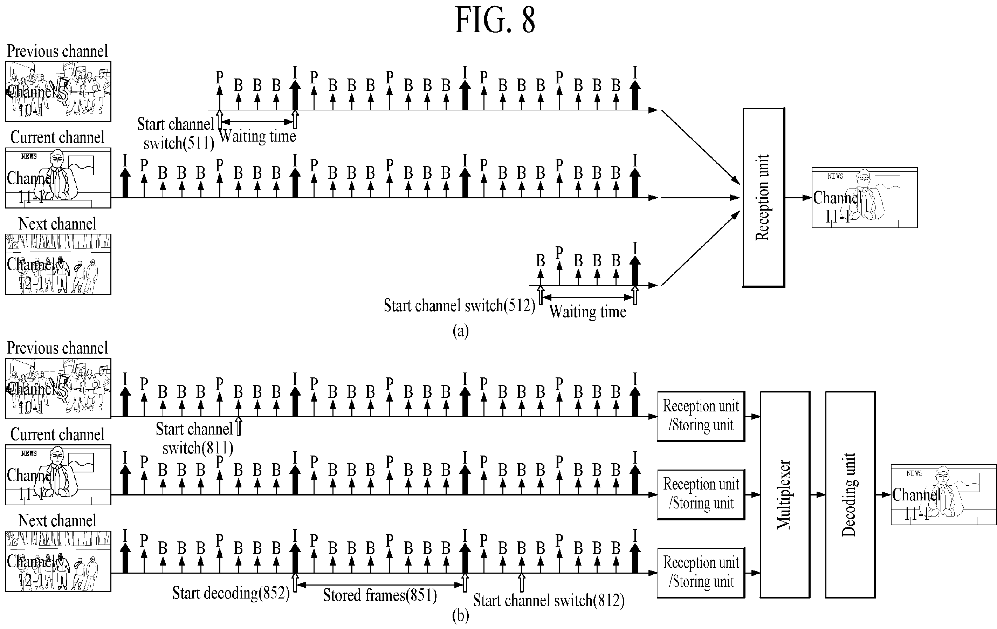

FIG. 8(a) and FIG. 8(b) are diagrams illustrating an example of comparing a waiting time during a channel switch according to the method of the second embodiment with a waiting time during a channel switch according to a conventional method.

That is, FIG. 8(a) is a diagram illustrating an example of the waiting time during a channel switch according to the conventional method, and FIG. 8(b) is a diagram illustrating an example of the waiting time during a channel switch according to the method of the second embodiment.

FIG. 8(a) illustrates an example in which the image display device is provided with only one reception unit.

For example, when the user selects channel-down using the remote controller 270 while the image display device is displaying the current channel 11-1, the reception unit tunes to the previous channel 10-1 and starts receiving the broadcast content of the previous channel 10-1. When the user selects the channel switch at position 511 of the previous channel 10-1, even though the channel switch starts at position 511, actual decoding starts after waiting until the next I-frame arrives, and the decoded frames are displayed. That is, after waiting for approximately a time interval of four frames until the next I-frame arrives, the video of the previous channel 10-1 is displayed on the screen.

As another example, when the user selects channel-up using the remote controller 270 while the image display device is displaying the current channel 11-1, the reception unit tunes to the next channel 12-1 and starts receiving the broadcast content of the next channel 12-1. When the user selects the channel switch at position 512 of the next channel 12-1, even though the channel switch starts at position 512, actual decoding starts after waiting until the next I-frame arrives, and the decoded frames are displayed. That is, after waiting for approximately a time interval of five frames until the next I-frame arrives, the video of the next channel 12-1 is displayed on the screen.

FIG. 8(b) illustrates an example in which the image display device is provided with at least three reception units and at least three storage units. For example, the three reception units/storage units of FIG. 8(b) may correspond to the first to third reception units 211 to 213 and the first to third storage units 621 to 623 of FIG. 7. In this case, the decoding unit performs decoding only on the broadcast content of the current channel provided through the multiplexer. When at least three decoding units are provided for the previous channel, the current channel, and the next channel, only the decoding unit that decodes the broadcast content of the current channel remains in an on (that is, active) state, and the remaining decoding units remain in an off (that is, inactive) state. For convenience of description, illustration and description of the display processor are omitted in FIG. 8(b).

For example, when the user selects channel-down using the remote controller 270 while the broadcast content of the current channel 11-1 is being received through the second reception unit/storage unit, the multiplexer, and the decoding unit, decoded, and then displayed on the screen, the multiplexer selects some frames (for example, the most recent GOP) including the most recent I-frame in the broadcast content of the previous channel 10-1, which are being received and stored by the first reception unit/storage unit, and outputs the selected frames to the decoding unit, and the decoding unit starts decoding from the selected GOP (that is, the most recent I-frame) and displays the broadcast content of the previous channel 10-1 on the screen. Assuming that the user selects the channel switch at position 811 of the previous channel 10-1, the first storage unit stores the most recent GOP based on a time point when the channel switch is selected, and the decoding unit starts decoding from this GOP. Therefore, the broadcast content of the previous channel 10-1 is displayed almost immediately with almost no waiting time at a time point when the channel switch starts. That is, even though the video of the previous channel 10-1 is displayed on the screen after waiting for approximately a time interval of four frames after the start of the channel switch in FIG. 8(a), the video of the previous channel 10-1 is displayed almost immediately after the start of the channel switch with almost no waiting time in FIG. 8(b).

As another example, when the user selects channel-up using the remote controller 270 while the broadcast content of the current channel 11-1 is being received through the second reception unit/storage unit, the multiplexer, and the decoding unit, decoded, and then displayed on the screen, the multiplexer selects some frames (for example, the most recent GOP) including the most recent I-frame of the broadcast content of the next channel 12-1, which are being received and stored by the third reception unit/storage unit, and outputs the selected frames to the decoding unit, and the decoding unit starts decoding from the selected GOP (that is, the most recent I-frame) and displays the broadcast content of the next channel 12-1 on the screen. Assuming that a time point when the user selects the channel switch is position 812 of the next channel 12-1, the third storage unit stores the most recent GOP 851 based on the time at which the channel switch is selected, and the decoding unit starts decoding from this GOP 851 beginning with the I-frame (for example, 852). Therefore, the broadcast content of the next channel 12-1 is displayed almost immediately with almost no waiting time at a time point when the channel switch starts. That is, even though the video of the next channel 12-1 is displayed on the screen after waiting for approximately a time interval of five frames after the start of the channel switch in FIG. 8(a), the video of the next channel 12-1 is displayed almost immediately after the start of the channel switch with almost no waiting time in FIG. 8(b).

Up to this point, the channel switching method in the RF-based image display device has been described.

Meanwhile, the image display device may be an Internet (or network)-based TV rather than an RF-based TV. Examples of such an image display device include IPTV and a set-top box. When the Internet-based image display device provides content using an adaptive streaming method, a tuner is not required. In the present disclosure, adaptive streaming is a technology that dynamically adjusts video quality according to network conditions of the user and the performance of the device (for example, the image display device) to provide an optimal viewing experience to the user. Adaptive streaming mainly uses HTTP (Hyper Text Transfer Protocol)-based protocols, and representative adaptive streaming protocols include MPEG-DASH (Dynamic Adaptive Streaming over HTTP) and HLS (HTTP Live Streaming).

In such an Internet-based image display device, a factor that significantly affects the channel switching time is a time required to request a channel switch and receive switched content in response to the request, rather than the I-frame. That is, in the case of the Internet-based image display device, when a channel switch is requested, the server providing the content always provides content starting from the I-frame, so there is no need to wait for an I-frame for decoding. Instead, there may be a waiting time between sending a channel switching request to the server and receiving content of the changed channel in response thereto. That is, in an image display device in which TV signals are delivered through a network, another important factor affecting the channel switching time is a network request for the next channel and the corresponding network response delay during channel switching. In other words, the network response time of the previous channel and/or the next channel determines the channel switching speed.

To address this issue, according to one embodiment of the present disclosure, while the broadcast content of the current channel is being received through the network, decoded, and then displayed on the screen, a channel changing request to the previous channel and/or a channel changing request to the next channel is transmitted to the server in advance. That is, while the broadcast content of the current channel is being displayed, a data transmission request for the previous channel and/or the next channel is made in advance.

Accordingly, in the case of a network-based image display device (for example, IPTV), a channel switching time may be reduced by eliminating a waiting time associated with a network request and a response for the new channel to which switching is to occur.

That is, when a channel switching request to the previous channel or the next channel is made, network requests for the previous channel and the next channel have already been issued. Therefore, the delay associated with the network request and response for the new channel to which switching is to occur is eliminated, thereby increasing channel switching speed.

In particular, in the case of a network-based image display device, multiplexing and audio/video codecs are increasingly implemented in software. Therefore, increasing the number of reception units and/or decoding units in the image display device imposes less burden than when such components are implemented in hardware.

In addition, when the image display device is based on the Internet, increasing the number of reception units and/or decoding units may increase Internet traffic. To address this issue, the present disclosure may temporarily operate reception units/decoding units in the background only when a motion of the remote controller (for example, a motion remote controller) preceding a channel switching operation is detected, or when there is a high likelihood that a preceding operation of consecutive channel-up/down button presses will occur, for example, only when a channel-up/down button is pressed for the first time after no button has been pressed for a long time, or only during several seconds immediately after the TV is turned on, during which a channel switching operation is likely to occur in consideration of TV usability. In this manner, the increase in Internet traffic may be minimized.

For example, when the remote controller moves, it is possible to prepare for a channel-up/down button operation of the user by operation of the reception unit/decoding unit in the background.

Each of the above-described parts, modules, or units may be a software part, a processor, or a hardware part executing continuous execution procedures stored in a memory (or a storage unit). Each step described in the above-described embodiments may be performed by a processor, a software part, or a hardware part. Each module/block/unit described in the above-described embodiments may operate as a processor, a software part, or a hardware part. In addition, methods proposed by the embodiments may be executed as code. The code may be written in a processor-readable storage medium, and thus may be read by a processor provided in an apparatus.

For convenience of explanation, the present specification has described the drawings separately, but a new embodiment may also be designed by combining the embodiments described in the drawings. In addition, designing a computer-readable recording medium in which a program for executing the previously described embodiments is recorded according to the needs of those skilled in the art also falls within the scope of the present disclosure.

The apparatus and method according to the present disclosure are not limited to the configurations and methods of the embodiments described above, and the embodiments may be configured by selectively combining all or part of the respective embodiments such that various modifications may be made.

In the present disclosure, terms such as first and second may be used to describe various components of the present disclosure. However, various components according to the present disclosure should not be interpreted as being limited by these terms. These terms are merely used to distinguish one component from another component. For example, a first user input signal may be referred to as a second user input signal. Similarly, the second user input signal may be referred to as the first user input signal. Use of these terms should be construed as not departing from the scope of the various embodiments. The first user input signal and the second user input signal are both user input signals, but do not mean the same user input signals unless clearly indicated by context.

Terms used to describe the present disclosure are used for the purpose of describing specific embodiments and are not intended to limit the embodiments. As used in the description of the embodiments and the claims, the singular is intended to include the plural unless clearly indicated by context. In addition, the expression "and/or" is used to mean inclusion of all possible combinations of the terms. The expression "include" indicates presence of features, numbers, steps, elements, and/or components, and does not preclude presence or addition of one or more other features, numbers, steps, elements, and/or components. Conditional expressions used to describe the present disclosure, such as in the case of and when, are not to be interpreted as being limited only to optional cases. It is intended that, when a specific condition is satisfied or in response to a specific condition, a related operation is performed or a related definition is construed.

### MODE FOR THE DISCLOSURE

The best mode for the disclosure has been described above in detail.

### INDUSTRIAL APPLICABILITY

It will be apparent to those skilled in the art that various changes and modifications may be made to the embodiments without departing from the spirit or scope of the embodiments. Accordingly, the embodiments are intended to include all such changes and modifications within the scope of the appended claims and equivalents thereof.

## Claims

1. A channel switching method in an image display device, the channel switching method comprising:
receiving content of a current channel;
receiving content of a previous channel relative to the current channel;
receiving content of a next channel relative to the current channel;
decoding frames included in the received content of the current channel;
displaying, on a screen, the content of the current channel including the decoded frames;
decoding frames included in the received content of the previous channel or storing some of the frames included in the received content of the previous channel, and then starting decoding from the stored some frames in response to selection of channel-down from a remote controller;
displaying, on the screen, content of the previous channel including the frames, which are decoded in the decoding frames included in the received content of the previous channel, at a time point when channel-down is selected from the remote controller;
decoding frames included in the received content of the next channel or storing some of the frames included in the received content of the next channel, and then starting decoding from the stored some frames in response to selection of channel-up from the remote controller; and
displaying, on the screen, content of the next channel including the frames, which are decoded in the decoding frames included in the received content of the next channel, at a time point when channel-up is selected from the remote controller.

2. The channel switching method of claim 1, wherein the frames included in the received content are grouped on a GOP (Group Of Pictures) basis, and each GOP includes at least one I-frame, one or more P-frames, and one or more B-frames.

3. The channel switching method of claim 2, wherein some of the frames of the content of the previous channel stored in the decoding frames included in the received content of the previous channel are frames in a most recently received GOP.

4. The channel switching method of claim 2, wherein, when decoding the frames included in the received content of the previous channel in the decoding frames included in the received content of the previous channel, decoding of a B-frame is omitted, and decoding of the B-frame is performed from a time point when channel-down is selected from the remote controller.

5. The channel switching method of claim 2, wherein some of the frames of the content of the next channel stored in the decoding frames included in the received content of the next channel are frames in a most recently received GOP.

6. The channel switching method of claim 2, wherein, when decoding the frames included in the received content of the next channel in the decoding frames included in the received content of the next channel, decoding of a B-frame is omitted, and decoding of the B-frame is performed from a time point when channel-up is selected from the remote controller.

7. The channel switching method of claim 2, further comprising transmitting, to a server, in advance before channel switching by the remote controller, at least one of a channel changing request to the previous channel or a channel changing request to the next channel when the content of the current channel is received from the server through a network.

8. An image display device comprising:
a remote controller capable of selecting channel-down to a previous channel and channel-up to a next channel relative to a current channel for channel switching;
a first channel processor configured to receive content of the previous channel and store some of frames included in the received content of the previous channel;
a second channel processor configured to receive content of the current channel;
a third channel processor configured to receive content of the next channel and store some of frames included in the received content of the next channel;
a selector configured to select and output frames of content of one of the first channel processor to the third channel processor;
a decoding unit configured to decode the frames of the content output from the selector;
a display processor configured to display, on a screen, content including the frames decoded by the decoding unit; and
a controller configured to control the selector and the decoding unit so that decoding starts from some frames stored in the first channel processor or from some frames stored in the third channel processor according to selection of channel-down or channel-up by the remote controller.

9. The image display device of claim 8, wherein the frames included in the received content are grouped on a GOP basis, and each GOP includes at least one I-frame, one or more P-frames, and one or more B-frames.

10. The image display device of claim 9, wherein some of the frames of the content of the previous channel stored in the first channel processor are frames in a most recently received GOP.

11. The image display device of claim 9, wherein some frames of the content of the next channel stored in the third channel processor are frames in a most recently received GOP.

12. The image display device of claim 8, wherein, when the content of the current channel is received from a server through a network, the controller transmits, to the server, in advance before channel switching by the remote controller, at least one of a channel changing request to the previous channel or a channel changing request to the next channel.

13. An image display device comprising:
a remote controller capable of selecting channel-down to a previous channel and channel-up to a next channel relative to a current channel for channel switching;
a first channel processor configured to receive content of the previous channel and decode frames included in the received content of the previous channel;
a second channel processor configured to receive content of the current channel and decode frames included in the received content of the current channel;
a third channel processor configured to receive content of the next channel and decode frames included in the received content of the next channel;
a selector configured to select and output decoded frames from one of the first channel processor to third channel processor;
a display processor configured to display, on a screen, content including the frames selected by the selector; and
a controller configured to control the selector to select the decoded frames from one of the first channel processor to third channel processor according to selection of channel-down or channel-up by the remote controller.

14. The image display device of claim 13, wherein the frames included in the received content are grouped on a GOP basis, and each GOP includes at least one I-frame, one or more P-frames, and one or more B-frames.

15. The image display device of claim 14, wherein the first channel processor omits decoding of the B-frame when decoding the frames included in the received content of the previous channel, and performs decoding of the B-frame from a time point when channel-down is selected from the remote controller.

16. The image display device of claim 14, wherein the third channel processor omits decoding of the B-frame when decoding the frames included in the received content of the next channel, and performs decoding of the B-frame from a time point when channel-up is selected from the remote controller.

17. The image display device of claim 13, wherein, when the content of the current channel is received from a server through a network, the controller transmits, to the server, in advance before channel switching, at least one of a channel changing request to the previous channel or a channel changing request to the next channel.
